# EUROPEAN PATENT SPECIFICATION

(11) **EP 1 845 169 B1**
(45) Date of publication and mention of the grant of the patent: **08.10.2014**
(21) Application number: 06712962.7
(22) Date of filing: 27.01.2006
(51) Int. Cl.: C22B 58/00, C22B 3/44, C22B 7/00, C22C 28/00, C25C 1/22

(54) **METHOD FOR RECOVERING INDIUM**
VERFAHREN ZUR RÜCKGEWINNUNG VON INDIUM
PROCÉDÉ DESTINÉ À LA RÉCUPERATION DE L'INDIUM

(30) Priority: 31.01.2005 JP 2005022836
(43) Date of publication of application: 17.10.2007
(73) Proprietor: Dowa Metals & Mining Co., Ltd., Tokyo 101-8617 (JP)
(72) Inventor: NAKAMURA, Yuzuru, Akita, 0100001 (JP); OGASAWARA, Shigeru, Akita, 0100126 (JP); KOMORI, Atsushi, Akita, 0101613 (JP); AOSAKI, Hitoshi, Akita 0110943 (JP); TSUKADA, Akira, Akita, 0101654 (JP)
(74) Representative: Manitz, Finsterwald & Partner GbR
(86) International application number: PCT/JP2006/301819
(87) International publication number: WO 2006/080565

(56) References cited:
- WO-A-03/084864
- JP-A- 05 156 381
- JP-A- 11 269 570
- JP-A- 2000 169 991
- JP-A- 2001 040 436
- JP-A- 2001 207 225
- JP-A- 2002 069 544
- JP-A- 2002 069 684
- JP-A- 2005 146 420
- JP-A- 2006 083 457
- FATHI HABASHI: "Handbook of Extractive Metallurgy (Volume III)" 1997, WILEY-VCH , WEINHEIM, GERMANY , XP002484516 * page 1535 - page 1537 *
- BARAKAT M A: "Recovery of lead, tin and indium from alloy wire scrap" HYDROMETALLURGY, ELSEVIER SCIENTIFIC PUBLISHING CY. AMSTERDAM, NL, vol. 49, no. 1-2, 1 June 1998 (1998-06-01), pages 63-73, XP004124807 ISSN: 0304-386X

## Description

### Technical Field

The present invention relates generally to amethodforrecoveringindium. Morespecifically, the invention relates to a method for recovering indium metal from indium containing substances, such as indium-tin-oxide (ITO) target scraps.

### Background Art

With the rapid development of liquid crystal techniques in recent years, a demand for ITO films used as transparent conductive films for liquid crystals is remarkably increased, and the quantity of ITO target materials consumed as the raw materials of ITO films is also remarkably increased.

As a conventional method for recovering indium from indium containing substances, such as ITO target scraps, a method utilizing solvent extraction is proposed (see, e.g., Japanese Patent Laid-Open No. 8-91838). However, this method has complicated steps due to the repetition of extraction and back extraction, and costs a lot due to the use of expensive solvents. There is also proposed a method comprising the steps of: dissolving an indium containing substance in hydrochloric acid or a mixed acid of hydrochloric acid and sulfuric acid; putting an indium metal plate in the solution after dissolution, to replace impurity ions in the solution to deposit and remove substitution products; and electrowinning indium metal using the solution after dissolution as an electrolytic solution (see, e.g., Japanese Patent Laid-Open No. 10-204673). This method has simple steps, but there is a limit to the concentration of impurity ions capable of being removed by substitution and deposition, so that the purity of obtainable indium metal is only about 99.99 %.

In order to solve such problems in conventional methods for recovering indium, there is proposed a method comprising the steps of: dissolving an indium containing substance in hydrochloric acid; adding an alkali to the solution after dissolution, to neutralize the solution so that the pH of the solution is 0.5 to 4; depositing and removing hydroxides of predetermined metal ions in the solution; blowing hydrogen sulfide gas into the solution to deposit and remove sulfides of metal ions which are harmful to electrolysis; and then, electrowinning indium metal using the solution as an initial electrolytic solution (see, e.g., Japanese Patent Laid-Open No. 2000-169991). This method is very useful as a method for recycling ITO target scraps and so forth since it is possible to recover indium having a high purity of not less than 99.999 % at simple and inexpensive steps.

However, the content of indium in indium containing substances, such as ITO target scraps, and the shape and size of the substances are not constant, so that such indium containing substances can not suitably used as recycled materials in the method disclosed in Japanese Patent Laid-Open No. 2000-169991, as they are. In particular, at the step of dissolving indium containing substances in hydrochloric acid, the variation in sharp and size of raw materials causes the increase of the treating time and/or the decrease of the leaching rate, so that the treating time and leaching rate at the dissolving step are changed. If the decrease of the treating time takes precedence over the improvement of the leaching rate at the dissolving step, the leaching rate is decreased, so that it is required to additionally provide a circulating or reprocessing line for improving the leaching rate. On the other hand, if the improvement of the leaching rate (recovery) takes precedence over the decrease of the treating time at the dissolving step, it takes a lot of time to obtain a desired leaching rate. Therefore, in order to industrially utilize the method disclosed in Japanese Patent Laid-Open No. 2000-169991, it is required to achieve both of the shortening of the treating time and the improvement of the leaching rate at the dissolving step so that indium can be recovered in a short time and with a high recovery. In addition, in the method disclosed in Japanese Patent Laid-OpenNo. 169991, the amount of tin in indium metal obtained by electrowinning is about 1 ppm, so that it is desired to further decrease the amount of tin.

Fathi Habashi discloses in Handbook of Extractive Metallurgy, 1997, Volume III, Wiley-VCH, different methods for the recovery of indium resulting in indium having a purity of up to 99.999 %.

WO 03/084864 A2 related to the processing of zinc and indium-containing materials in order to produce ultra-dispersed indium powder by transforming indium into a salt compound and subsequently treating the compound with an aqueous solution in two stages using redistillated water and an acetic acid solution.

### Disclosure of the Invention

It is therefore an object of the present invention to eliminate the aforementionedproblems and to provide a method for recovering indium, the method being capable of recovering indium having a high purity at simple and inexpensive steps in a short time and with a high recovery.

In order to accomplish the aforementioned object, the inventors have diligently studied and found that it is possible to achieve both of the shortening of a treating time and the improvement of a leaching rate at a dissolving step and it is possible to stabilize a neutralized precipitate to decrease the amount of tin in electrowon indium metal, so that it is possible to provide a method for recovering indium, the method being capable of recovering indium having a high purity at simple and inexpensive steps in a short time and with a high recovery, if an indium containing substance is dissolved in an acid after being ground until the percentage of coarse particles having a larger particle size than a predetermined particle size is not larger than a predetermined percentage and if aging is carried out at a predetermined temperature for a predetermined period of time after neutralization. Thus, the inventors have made the present invention.

According to the present invention, a method for recovering indium comprises:
- a grinding step of grinding an indium containing substance until the percentage of coarse particles of the indium containing substance is not larger than 10 %, the coarse particles having a larger particle size than 150 um;
- a dissolving step of dissolving fine particles, which are obtained at the grinding step, in an acid;
- a neutralizing step of adding an alkali to a solution after dissolution, which is obtained at the dissolving step, to neutralize the solution after dissolution so that the solution after dissolution has a pH of 0.5 to 4, to deposit and remove hydroxides of predetermined metal ions in the solution after dissolution;
- an aging step of aging a solution after neutralization, which is obtained at the neutralizing step, at a temperature, which is in the range between room temperature and 80 °C, for a predetermined period of time, which is not shorter than 2 hours;
- a sulfurizing step of blowing hydrogen sulfide gas into a solution after aging, which is obtained at the aging step, to deposit and remove sulfides of metal ions; and
- an electrowinning step of using a solution after sulfurization, which is obtained at the sulfurizing step, as an initial electrolytic solution to electrowin indium metal.

The predetermined percentage in the grinding step is preferably 5 % and more preferably substantially 0 %. At the aging step, the predetermined temperature is preferably in the range of from 40 °C to 70 °C, and more preferably in the range of from 60 °C to 70 °C. The predetermined period of time is preferably 3 hours or longer. Furthermore, the method for recovering indium may further comprise a classification step of removing coarse particles having a larger particle size than the predetermined particle size of 150 µm by classification before the dissolving step after the grinding step. The indium containing substance is preferably an ITO target scrap.

According to the present invention, indium has a purity of not less than 99.999% and contains tin, the content of which is not larger than 0.5 ppm and preferably not larger than 0.1 ppm. Alternatively, indium is obtained by electrowinning which uses indium-tin-oxide as a rawmaterial, and contains tin, the content of which is not larger than 0.5 ppm and preferably not larger than 0.1 ppm. Such indium can be obtained by the above described method for recovering indium according to the present invention.

According to the present invention, it is possible to recover indium having a high purity at simple and inexpensive steps in a short time and with a high recovery.

### Brief Description of the Drawings

FIG. 1 is a process drawing showing a method for recovering indium according to the present invention;
FIG. 2 is a graph showing a variation in leaching rate with respect to time in Examples 1 and 2 and Comparative Example 1;

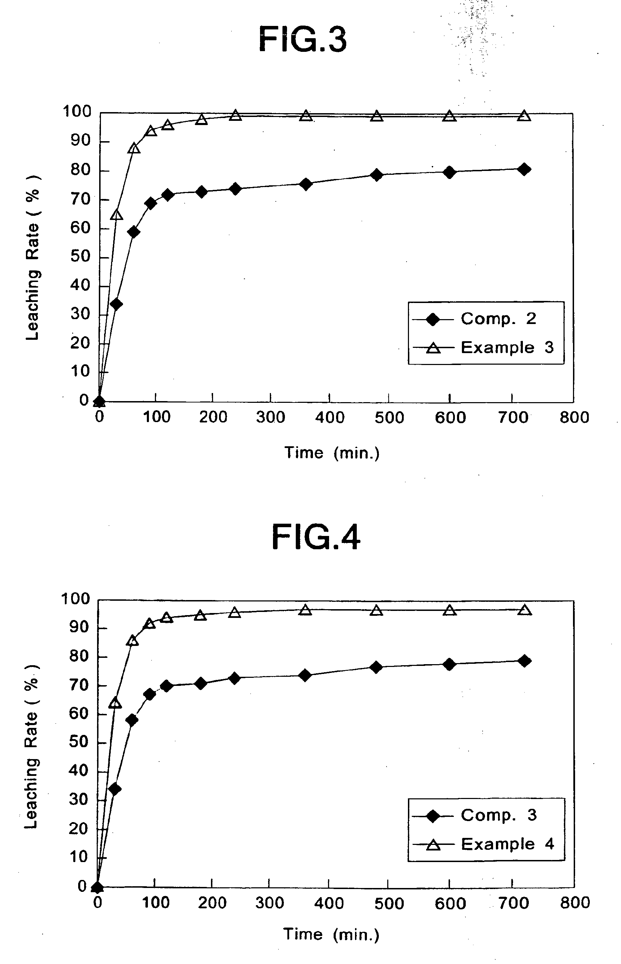

FIG. 3 is a graph showing a variation in leaching rate with respect to time in Example 3 and Comparative Example 2; and
FIG. 4 is a graph showing a variation in leaching rate with respect to time in Example 4 and Comparative Example 3.

### Best Mode for Carrying Out the Invention

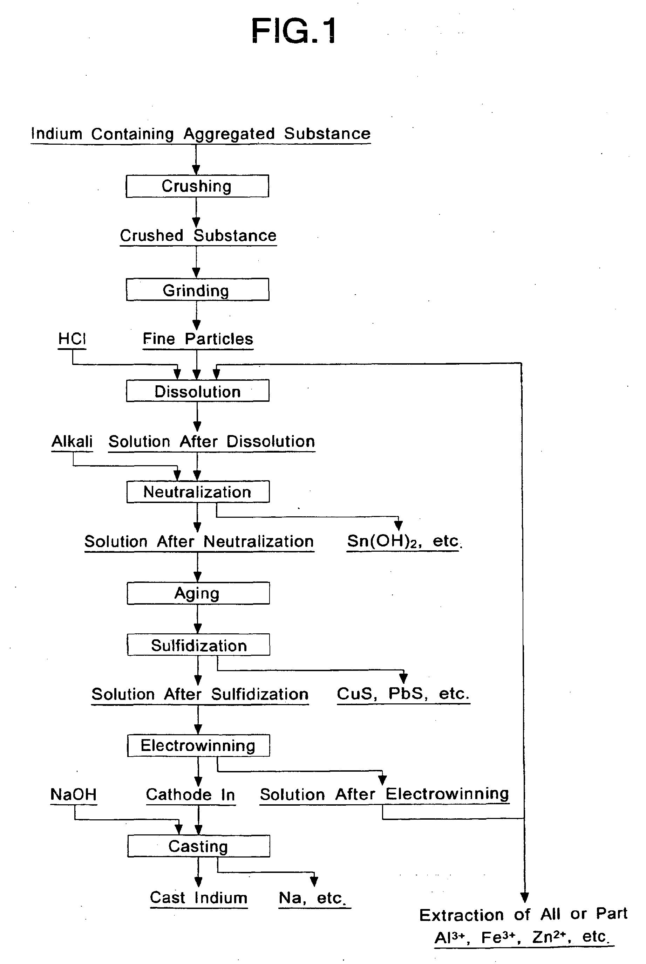

Referring to the process drawing of FIG. 1, the preferred embodiment of a method for recovering indium according to the present invention will be described below.

As shown in FIG. 1, in the preferred embodiment of a method for recovering indium according to the present invention, after an indium containing substance, such as an ITO target scrap, is crushed, the crushed substance is ground until the percentage of coarse particles having a larger particle size than 150µm is not larger than 10%. Thereafter, the ground substance is dissolved in hydrochloric acid, and an alkali, such as sodium hydroxide or sodium carbonate, is added to the solution to neutralize the solution so that the pH of the solution is 0.5 to 4. Then, the solution after dissolution is aged at a predetermined temperature between room temperature and 80°C for a predetermined period of time of at least 2 hours to deposit and remove hydroxides of predetermined metal ions in the solution. Then, hydrogen sulfide gas is blown into the solution to deposit and remove sulfides of metal ions which are harmful to electrolysis at the subsequent step. Thereafter, the solution thus obtained is used as an electrolytic solution for electrowinning indium metal to recover indium having a high purity.

The indium containing substances serving as raw materials are preferably ITO target scraps. In the preferred embodiment of a method for recovering indium according to the present invention, various indium containing substances may be used as the raw materials. The crushing and grinding of the raw materials may be carried out by a crusher and a grinder, respectively. The percentage of coarse particles having a larger particle size than 150 µm in fine particles obtained by grinding is 10 % or less, preferably 5 % or less, and more preferably substantially 0 %. If the percentage of coarse particles is thus decreased by grinding, the contact of the raw materials with a hydrochloric acid solution can be improved for obtaining a desired leaching rate in a short time. Furthermore, classification, such as sieving or screening, may be carried out in order to thus remove coarse particles.

The amount of the solution after dissolving the indium containing fine particles in hydrochloric acid is preferably adjusted so that the concentration of indium is in the range of from 20 g/L to 200 g/L, and the amount of hydrochloric acid used in dissolution is preferably 1.1 to 1.5 times as large as the theoretical equivalent thereof. In addition, the solution after dissolution is preferably heated in order to promote dissolution.

The reasons why the alkali is added so that the pH is 0.5 to 4 are that the pH is adjusted to be 4 or lower to prevent the deposition of hydroxides of indium and that the pH is adjusted to be 0.5 or higher to hydrolyze impurity ions to deposit hydroxides of the ions. By thus adding the alkali, it is possible to efficiently remove most of tin which is a main impurity in ITO target scraps.

The reason why aging is carried out after neutralization is that the neutralized precipitate is stabilized. The aging temperature is in the range of from a room temperature to 80 °C, preferably in the range of from 40 °C to 70 °C, and more preferably in the range of from 60 °C to 70 °C. The aging time is 2 hours or longer, and preferably 3 hours or longer.

After deposited hydroxides of tin and so forth are removed by filtration, hydrogen sulfide gas is blown into the filtrate to deposit and remove sulfides of copper, lead and so forth, which are harmful to electrolysis at the subsequent step, and sulfides of a very small amount of tin. The indium-dissolved solution thus purified is fed to the electrowinning step at which indium is recovered as a metal by electrowinning on appropriate electrolytic conditions. The indium metal thus recovered contains alkali metals, such as sodium, which are components of the electrolytic solution, as impurities. Therefore, the indium metal, together with solid sodium hydroxide, is heated to be mixed and melted, so that the alkali metals are dissolved in the melted sodium hydroxide to be removed, and then, the metal part obtained by gravity separation is cast in a mold to be cooled to recover indium having a high purity.

The solution after electrowinning is mixed with hydrochloric acid to be reused for the dissolution of indium containing fine particles. In order to prevent the accumulation of base metal ions, such as aluminum and iron ions, which are baser than indium, part or all of the solution after electrowinning is preferably extracted to the outside of the system.

Examples of a method for recovering indium according to the present invention will be described below in detail.

### Example 1

After ITO target scraps containing about 400 g of indium were crushed, the crushed scraps were ground to obtain fine particles wherein the percentage of coarse particles having a larger particle size than 150 µm was about 4 %. The fine particles thus obtained were dissolved in 5 moles of hydrochloric acid to obtain 2L of an indium-dissolved solution. At the dissolving step using hydrochloric acid, the leaching rate was 100 % after 240 minutes. After sodium hydroxide was added to the indium-dissolved solution to neutralize the solution so that the pH of the solution was 1.7, the deposited hydroxides were removed by filtration to obtain a solution after neutralization. The solution after neutralization was aged at 60 °C for 3 hours, and thereafter, hydrogen sulfide gas was brown into the solution at a flow rate of 50 cc/min for 2 minutes. Then, the deposited sulfides were removed by filtration to obtain a solution after sulfurization. The solution after sulfurization thus purified was used as an initial electrolytic solution for electrowinning indium metal on electrolytic conditions (at a liquid temperature of 30 °C and a current density of 150 A/m²). The amount of tin in the electrowon indium metal was 0.4 ppm. The electrowon metal, together with solid sodium hydroxide, was heated to be mixed and melted, and a metal part obtained by gravity separation was cast in a mold to be cooled to recover cast indium. The grade of the cast indium thus obtained was not less than 99.999 %, so that indium having a high purity was obtained.

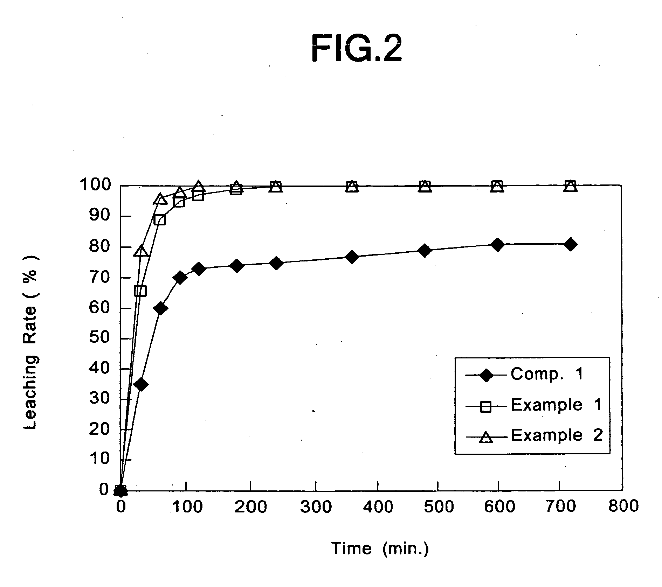

The compositions of the solution after dissolution, solution after neutralization and solution after sulfurization, and the grades of the electrowon metal and cast indium, which were obtained in this example, are shown in Table 1, and the relationship between the leaching rate and time is shown in Table 2 and FIG. 2.

**Table 1**

| | In | Sn | Cu | Pb | Na | Zn | Cr | Ni | Fe |
|---|---|---|---|---|---|---|---|---|---|
| Solution after Dissolution(g/l) | 200 | 0.99 | 0.0025 | 0.0010 | - | - | 0.0010 | <0.001 | 0.1980 |
| Solution after Neutralization(g/l) | 198 | <0.001 | 0.0024 | 0.0010 | - | - | 0.0010 | <0.001 | 0.0018 |
| Solution after Sulfurization(g/l) | 198 | <0.001 | <0.001 | <0.001 | - | - | 0.0010 | <0.001 | <0.001 |
| Electrowon Metal (ppm) | - | 0.4 | <0.1 | <0.1 | 31 | <0.1 | <0.1 | 0.5 | <0.1 |
| Cast Indium (ppm) | >99.999 (%) | 0.5 | <0.1 | <0.1 | <0.1 | <0.1 | <0.1 | 0.3 | <0.1 |

**Table 2**

| | Comp. Example 1 | | Example 1 | | Example 2 | |
|---|---|---|---|---|---|---|
| | 150 µm< : 86% | | 150µm< : 4% | | 150µm< : 0% | |
| Time (min.) | In (g/l) | Leaching Rate(%) | In (g/l) | Leaching Rate(%) | In (cm/l) | Leaching Rate(%) |
| 0 | 0 | 0 | 0 | 0 | 0 | 0 |
| 30 | 70 | 35 | 133 | 66 | 159 | 79 |
| 60 | 120 | 60 | 179 | 89 | 192 | 96 |
| 90 | 140 | 70 | 191 | 95 | 197 | 98 |
| 120 | 146 | 73 | 195 | 97 | 201 | 100 |
| 180 | 148 | 74 | 198 | 99 | 201 | 100 |
| 240 | 151 | 75 | 200 | 100 | 201 | 100 |
| 360 | 155 | 77 | 200 | 100 | 201 | 100 |
| 480 | 160 | 79 | 201 | 100 | 201 | 100 |
| 600 | 163 | 81 | 200 | 100 | 201 | 100 |
| 720 | 164 | 81 | 200 | 100 | 201 | 100 |

Furthermore, the amount of indium in the ITO target scraps was determined by measurement using an inductively coupled plasma mass spectrometer (ICP-Mass) after the fine particles obtained by grinding the ITO target scraps were dissolved in hydrochloric acid and tartaric acid. The percentage of coarse particles (larger particles than 150 µ m) in the fine particles was determined by calculating the percentage of the coarse particle part on the basis of the results that a particle size distribution was measured by a laser diffraction type particle size distribution measuring device (Model LA500 produced by HORIBA, Ltd.) after a small number of the fine particles were ultrasonically dispersed in a dispersion medium (200 mL of a sodium hexametaphosphate solution).

The compositions of the solution after dissolution, solution after neutralization and solution after sulfurization were determined by measurement using an ICP-Mass after these solutions were sampled. The grades of the electrowon metal and cast indium were determined by measurement using an ICP-Mass after each of the electrowon metal and the case indium was dissolved in nitric acid.

The variation in leaching rate with respect to time was determined by analyzing the residue and liquid, which were obtained by the solid-liquid separation of a slurry sampled every a predetermined time, by means of an ICP-Mass. The liquid after solid-liquid separation was diluted with nitric acid to be used as a sample to be analyzed. The residue after solid-liquid separation was dried to be dissolved in nitric acid and sulfuric acid, and then, dissolved in perchloric acid to be used as a sample to be analyzed.

### Example 2

Cast indium was recovered by the same method as that in Example 1, except that fine particles containing no coarse particles having a larger particle size than 150 µm were obtained by grinding. In this example, the leaching rate was 100 % after 120 minutes at the dissolving step using hydrochloric acid. The amount of tin in the electrowon metal was 0.1 ppm. Furthermore, the compositions of the solution after dissolution, solution after neutralization and solution after sulfurization, and the grades of the electrowon metal and cast indium, which were obtained in this example, are shown in Table 3, and the relationship between the leaching rate and time in this example is shown in Table 2 and FIG. 2.

**Table 3**

| | In | Sn | Cu | Pb | Na | Zn | Cr | Ni | Fe |
|---|---|---|---|---|---|---|---|---|---|
| Solution after Dissolution(g/l) | 201 | 1.01 | 0.0026 | 0.0012 | - | - | 0.0013 | <0.001 | 0.2000 |
| Solution after Neutralization(g/l) | 197 | <0.001 | 0.0026 | 0.0012 | - | - | 0.0013 | <0.001 | 0.0013 |
| Solution after Sulfurization(g/l) | 198 | <0.001 | <0.001 | <0.001 | - | - | 0.0013 | <0.001 | <0.001 |
| Electrowon Metal (ppm) | - | <0.1 | <0.1 | <0.1 | 36 | <0.1 | <0.1 | 0.6 | <0.1 |
| Cast Indium (ppm) | >99.999 (%) | <0.1 | <0.1 | <0.1 | <0.1 | <0.1 | <0.1 | 0.2 | <0.1 |

### Comparative Example 1

Cast indium was recovered by the same method as that in Example 1, except that grinding and aging were not carried out. In this comparative example, the percentage of coarse particles having a larger particle size than 150 µm was about 86 % before dissolution in hydrochloric acid, and the leaching rate was only 81 % after 720 minutes at the dissolving step using hydrochloric acid. The amount of tin in the electrowon metal was 0.9 ppm which was larger than that in Examples 1 and 2. Furthermore, the compositions of the solution after dissolution, solution after neutralization and solution after sulfurization, and the grades of the electrowon metal and cast indium, which were obtained in this comparative example, are shown in Table 4, and the relationship between the leaching rate and time in this comparative example is shown in Table 2 and FIG. 2.

**Table 4**

| | In | Sn | Cu | Pb | Na | Zn | Cr | Ni | Fe |
|---|---|---|---|---|---|---|---|---|---|
| Solution after Dissolution(g/l) | 164 | 1.08 | 0.0025 | 0.0012 | - | - | 0.0012 | 0.0010 | 0.2010 |
| Solution after Neutralization(g/l) | 160 | <0.001 | 0.0025 | 0.0012 | - | - | 0.0012 | 0.0010 | 0.0024 |
| Solution after Sulfurization(g/l) | 160 | <0.001 | <0.001 | <0.001 | - | - | 0.0012 | 0.0010 | <0.001 |
| Electrowon Metal (ppm) | - | 0.9 | <0.1 | <0.1 | 40 | <0.1 | <0.1 | 0.7 | <0.1 |
| Cast Indium (ppm) | >99.999 (%) | 0.9 | <0.1 | <0.1 | <0.1 | <0.1 | <0.1 | 0.5 | <0.1 |

### Example 3, Comparative Example 2

A dissolving step was carried out by the same method as that in each of Example 1 and Comparative Example 1, except that sulfuric acid was substituted for hydrochloric acid. As a result, the leaching rate was 99 % after 240 minutes in Example 3 in which there were used fine particles wherein the percentage of coarse particles having a larger particle size than 150 µ m was about 4 %, whereas the leaching rate was only 81 % after 720 minutes in Comparative Example 2 wherein grinding was not carried out. These results are shown in Table 5.

**Table 5**

| | Comp. Example 2 | | Example 3 | |
|---|---|---|---|---|
| | 150µm< : 86% | | 150µm< : 4% | |
| Time (min.) | In (g/l) | Leaching Rate (%) | In (g/l) | Leaching Rate (%) |
| 0 | 0 | 0 | 0 | 0 |
| 30 | 69 | 34 | 132 | 65 |
| 60 | 119 | 59 | 177 | 88 |
| 90 | 139 | 69 | 189 | 94 |
| 120 | 144 | 72 | 193 | 96 |
| 180 | 147 | 73 | 196 | 98 |
| 240 | 149 | 74 | 198 | 99 |
| 360 | 153 | 76 | 198 | 99 |
| 480 | 158 | 79 | 198 | 99 |
| 600 | 161 | 80 | 198 | 99 |
| 720 | 162 | 81 | 198 | 99 |

### Example 4, Comparative Example 3

A dissolving step was carried out by the same method as that in each of Example 1 and Comparative Example 1, except that nitric acid was substituted for hydrochloric acid. As a result, the leaching rate was 97 % after 360 minutes in Example 4 in which there were used fine particles wherein the percentage of coarse particles having a larger particle size than 150 µm was about 4 %, whereas the leaching rate was only 79 % after 720 minutes in Comparative Example 3 wherein grinding was not carried out. These results are shown in Table 6.

**Table 6**

| | Comp. Example 3 | | Example 4 | |
|---|---|---|---|---|
| | 150µm< : 86% | | 150µm< : 4% | |
| Time (min.) | In (g/l) | Leaching Rate(%) | In (g/l) | Leaching Rate(%) |
| 0 | 0 | 0 | 0 | 0 |
| 30 | 68 | 34 | 129 | 64 |
| 60 | 117 | 58 | 173 | 86 |
| 90 | 136 | 67 | 185 | 92 |
| 120 | 141 | 70 | 189 | 94 |
| 180 | 143 | 71 | 192 | 95 |
| 240 | 146 | 73 | 194 | 96 |
| 360 | 150 | 74 | 194 | 97 |
| 480 | 154 | 77 | 194 | 97 |
| 600 | 157 | 78 | 194 | 97 |
| 720 | 158 | 79 | 194 | 97 |

## Claims

1. A method for recovering indium, said method comprising:
a grinding step of grinding an indium containing substance until the percentage of coarse particles of the indium containing substance is not larger than 10 %, the coarse particles having a larger particle size than 150 µm;
a dissolving step of dissolving fine particles, which are obtained at the grinding step, in an acid;
a neutralizing step of adding an alkali to a solution after dissolution, which is obtained at the dissolving step, to neutralize the solution after dissolution so that the solution after dissolution has a pH of 0.5 to 4, to deposit and remove hydroxides of predetermined metal ions in the solution after dissolution;
an aging step of aging a solution after neutralization, which is obtained at the neutralizing step, at a temperature, which is in the range between room temperature and 80 °C, for a predetermined period of time, which is not shorter than 2 hours;
a sulfurizing step of blowing hydrogen sulfide gas into a solution after aging, which is obtained at the aging step, to deposit and remove sulfides of metal ions; and
an electrowinning step of using a solution after sulfurization, which is obtained at the sulfurizing step, as an initial electrolytic solution to electrowin indium metal.

2. A method for recovering indium as set forth in claim 1, which further comprises a classification step of removing coarse particles having a larger particle size than 150 µm by classification before said dissolving step after said grinding step.

3. A method for recovering indium as set forth in claim 1, wherein said acid is selected from the group consisting of hydrochloric acid, sulfuric acid and nitric acid.

4. A method for recovering indium as set forth in claim 1, wherein said indium containing substance is an ITO target scrap.

## Patentansprüche

1. Verfahren zum Rückgewinnen von Indium, wobei das Verfahren umfasst:
einen Schleifschritt zum Schleifen einer indiumhaltigen Substanz, bis der Prozentsatz an groben Partikeln der indiumhaltigen Substanz nicht größer als 10 % ist, wobei die groben Partikel eine größere Partikelgröße als 150 µm aufweisen;
einen Auflösungsschritt zum Auflösen feiner Partikel, die bei dem Schleifschritt erhalten werden, in einer Säure;
einen Neutralisierungsschritt zum Zusatz einer Base zu einer Lösung nach der Auflösung, die bei dem Auflösungsschritt erhalten wird, um die Lösung nach der Auflösung zu neutralisieren, so dass die Lösung nach der Auflösung einen pH von 0,5 bis 4 aufweist, um Hydroxide von vorbestimmten Metallionen in der Lösung nach der Auflösung abzuscheiden und zu entfernen;
einen Alterungsschritt zum Altern einer Lösung nach der Neutralisierung, die bei dem Neutralisierungsschritt erhalten wird, bei einer Temperatur, die im Bereich zwischen Raumtemperatur und 80°C liegt, für eine vorbestimmte Zeitdauer, die nicht kürzer als 2 Stunden ist;
einen Sulfurierungsschritt zum Blasen von Wasserstoffsulfidgas in eine Lösung nach dem Altern, die bei dem Alterungsschritt erhalten wird, um Sulfide von Metallionen abzuscheiden und zu entfernten; und
einen Elektroextraktionsschritt zum Verwenden einer Lösung nach der Sulfurisierung, die bei dem Sulfurisierungsschritt erhalten wird, als eine anfängliche Elektrolytlösung, um Indiummetall elektrisch zu extrahieren.

2. Verfahren zum Rückgewinnen von Indium nach Anspruch 1, ferner mit einem Klassifizierungsschritt zum Entfernen grober Partikel, die eine größere Partikelgröße als 150 µm besitzen, durch Klassifizieren vor dem Auflösungsschritt nach dem Schleifschritt.

3. Verfahren zum Rückgewinnen von Indium nach Anspruch 1, wobei die Säure aus der Gruppe gewählt ist, die aus Chlorwasserstoffsäure, Schwefelsäure und Salpetersäure besteht.

4. Verfahren zum Rückgewinnen von Indium nach Anspruch 1, wobei die indiumhaltige Substanz ein ITO-Target-Schrott ist.

## Revendications

1. Procédé pour la récupération d'indium, ledit procédé comprenant :
une étape de broyage consistant à broyer une substance contenant de l'indium jusqu'à ce que le pourcentage de particules grossières dans la substance contenant de l'indium ne dépasse pas 10 %, les particules grossières ayant une taille de particules plus grande que 150 µm ;
une étape de dissolution consistant à dissoudre les particules fines qui sont obtenues lors de l'étape de broyage, dans un acide ;
une étape de neutralisation consistant à ajouter un alcalin à une solution après dissolution, qui est obtenue lors de l'étape de dissolution, pour neutraliser la solution après dissolution de telle sorte que la solution après dissolution possède un pH de 0,5 à 4, pour faire déposer et
supprimer les hydroxydes d'ions métalliques prédéterminés dans la solution après dissolution ;
une étape de vieillissement consistant à faire vieillir une solution après neutralisation, qui est obtenue lors de l'étape de neutralisation, à une température qui est dans la plage entre la température ambiante et 80°C, pendant une période temporelle prédéterminée qui n'est pas plus courte que deux heures ;
une étape de sulfuration consistant à souffler du sulfure d'hydrogène gazeux dans une solution après vieillissement, qui est obtenue lors de l'étape de vieillissement, pour faire déposer et supprimer les sulfures d'ions métalliques ; et
une étape d'extraction électrolytique consistant à utiliser une solution après sulfuration, qui est obtenue lors de l'étape de sulfuration, à titre de solution électrolytique initiale pour extraire de l'indium métallique par voie électrolytique.

2. Procédé pour récupérer de l'indium selon la revendication 1, qui comprend en outre une étape de classification pour supprimer les particules grossières ayant une taille de particules plus grande que 150 µm par classification avant ladite étape de dissolution et après ladite étape de broyage.

3. Procédé pour récupérer de l'indium selon la revendication 1, dans lequel ledit acide est sélectionné dans le groupe comprenant acide chlorhydrique, acide sulfurique et acide nitrique.

4. Procédé pour récupérer de l'indium selon la revendication 1, dans lequel ladite substance contenant de l'indium est un déchet de cible ITO.
